# EUROPEAN PATENT APPLICATION

(11) **EP 2 717 026 A2**
(43) Date of publication of application: **09.04.2014**
(21) Application number: 13185585.0
(22) Date of filing: 23.09.2013
(51) Int. Cl.: G01F 1/66

(54) **Method of and apparatus for determining a flow rate of a fluid and detecting gas bubbles or particles in the fluid**

(30) Priority: 04.10.2012 DE 102012019697
(71) Applicant: Sonotec Ultraschallsensorik Halle GmbH, 06112 Halle / Saale (DE)
(72) Inventor: Münch, Hans-Joachim, 06130 Halle/Saale (DE); zur Horst-Meyer, Santer, 06120 Halle/Saale (DE); Fritsche, Tobias, 06114 Halle/Saale (DE); Kahle, Jürgen, 04107 Leipzig (DE); Brandt, Diana, 06780 Zörbig / OT Cösitz (DE); Ködderitzsch, Peter, 06628 Bad Kösen/OT Punschrau (DE)
(74) Representative: Gulde Hengelhaupt Ziebig & Schneider

(57) **Abstract**

The invention relates to a method (30) of and an apparatus (1) for determining a flow rate of a fluid and detecting gas bubbles or particles in the fluid. In order to provide a method (30) and an apparatus (1), which can be used to perform more precise measurements and to provide a better safety, the invention provides that a collapse of an amplitude of an ultrasonic signal is used for detecting gas bubbles or particles.

## Description

The invention relates to a method of determining a flow rate of a fluid. Furthermore, the invention relates to an apparatus for determining a flow rate of a fluid.

Methods of and apparatuses for determining a flow rate are known. In order to be able not only to determine the flow rate, which corresponds to a flow velocity of the fluid, but also to determine the volume of the fluid that passed the apparatus, a separate measurement apparatus is necessary. The separate measurement apparatus is used for determining gas bubbles or particles in the fluid, which affect the transported volume of the fluid. Furthermore, gas bubbles and particles may compromise the usage of the fluid in a later step and may even endanger the health of a human being, e.g. in the case the fluid is blood transported through a heart-lung machine. Using the separate measurement apparatus, however, causes an increased effect.

Thus, an object underlying the invention is to provide a method and an apparatus of the above mentioned type, which provide for a more precise measurement and a better safety without an increased effort and in particular without a separate measurement apparatus.

The object is achieved according to the invention for the method mentioned in the beginning in that the method is a method of determining a flow rate of a fluid and of detecting gas bubbles or particles in the fluid, wherein at least one ultrasonic signal is induced into the fluid and a travel time of the ultrasonic signal through the fluid as well as an amplitude of the ultrasonic signal after travelling through the fluid are measured, wherein the travel time is being used for determining the flow rate and a collapse of the amplitude is being used for detecting gas bubbles or particles. For the apparatus mentioned in the beginning, the object is achieved according to the invention in that, the apparatus is an apparatus for determining a flow rate of a fluid and for detecting gas bubbles or particles in the fluid, the apparatus comprising at least one sensing arrangement with an ultrasonic emitter for emitting an ultrasonic signal, and an ultrasonic sensor for converting the ultrasonic signal into a measurement signal, that are arranged at opposite ends of a measurement path, which extends through a measurement channel for the fluid, the measurement apparatus further comprising an evaluation unit that is connected to the ultrasonic sensor in a signal transmitting manner and that is adapted to evaluate travel times of ultrasonic signals through the measurement path and to monitor amplitudes of ultrasonic signals after traveling through the measurement path in order to determine the flow rate and to detect gas bubbles and particles.

These simple solutions provide that gas bubbles and particles can be detected with the same apparatus that determents the flow rate of the fluid. Hence, no additional measurement apparatus is necessary, if the flow rate shall be determent and gas bubbles or particles shall be detected.

The solutions according to the invention can be combined as desired and further improved by the further following embodiments that are advantages on there own in each case.

According to a first possible embodiment of the method, at least two ultrasonic signals may subsequently be induced into the fluid in different directions and amplitudes of at least one of the ultrasonic signals after traveling through the fluid can be measured and used for detecting gas bubbles or particles. Moreover, travel times of each of the ultrasonic signals through the fluid can be measured and used for determining the flow rate. By using more than one ultrasonic signal, measurement errors can be decreased, e.g. by averaging determent flow rates. Furthermore, an offset of the measured flow rate in the direction of the flow can be determined by inducing the ultrasonic signals in different directions. In case that amplitudes of both of the two ultrasonic signals are measured and used for detecting gas bubbles or particles, the probability of detecting gas bubbles or particles is increased.

In a further advantageous embodiment of the method, a measurement cycle may be performed that comprises a first measurement step, in which a first ultrasonic signal is induced in a first direction, a second measurement step, in which a second ultrasonic signal is induced in a second direction that differs from the first direction, a third measurement step, in which a third ultrasonic signal is induced in a third direction that is the opposite direction to the first direction, and a fourth measurement step, in which a fourth ultrasonic signal is induced in a fourth direction that is the opposite direction to the second direction. By performing this measurement cycle, measurement errors and offsets can be eliminated most effectively.

According to a further possible advantageous embodiment, the amplitude can be measured after and preferably directly after the preceding measurement step. Gas bubbles or particles can thereby be swiftly detected, further improving safety.

In order to be able to determine the flow rate precisely, travel times of ultrasonic signals that comprise a collapsed amplitude may be ignored for determining the flow rate.

The collapsed amplitude may not be an indicator of small gas bubbles or particles, which may have a diameter below 50 µm. Small particles may occur, e.g. if the fluid starts to crystallize. Small gas bubbles may be produced by chemical reactions of the fluid causing degassing. In order to be able to determent such small gas bubbles or particles, a variation of a plurality of travel times may be used.

In particular, a phase or a zero-crossing of the amplitude may be used for detecting small gas bubbles or particles.

The at least one ultrasonic signal may comprise a plurality of ultrasonic pulses. The ultrasonic signal may be designated as ultrasonic burst. By using the plurality of ultrasonic pulses, a plurality of phases or zero-crossings of the amplitude can be derived with the at least one ultrasonic signal, thereby increasing the data provided for determining the flow rate and for detecting even small gas bubbles or particles. A burst preferably comprises or consists of a predefined number of pulses, e.g. between 1 and 10 pulses and typically 5 pulses. The frequency of the pulses may depend on the nominal frequency of the ultrasonic emitter and may be between 1 MHz and 4 MHz.

Due to the tracking the amplification, small gas bubbles or particles may not be detectable based on the collapsed amplitude. However, the variation of the travel times as described above provides for a possibility to detect such small gas bubbles or particles.

According to a further advantages embodiment, the apparatus may comprise at least two sensing arrangements, each having an ultrasonic emitter and an ultrasonic sensor, wherein the ultrasonic emitter and the ultrasonic sensor of each of the sensing arrangements are arranged at opposite ends of respective measurement paths that extend in different directions and through the measurement channel for the fluid. The evaluation unit is preferably connected to the ultrasonic sensors in a signal transmitting manner.

Each of the sensing arrangements may comprise an ultrasonic emitter at each end of the measurement path, such that ultrasonic signals can be induced in opposite directions by each of the sensing arrangements.

Ultrasonic emitters and ultrasonic sensors may be provided as ultrasonic transducers, which may function as a sensor or as an emitter, further reducing the amount of components.

The evaluation unit preferably comprises an amplitude measurement device and a time measurement device that are supplied with the measurement signal, in particular during a measurement of the flow rate. The measurement signal may be supplied to an amplifier first, which amplifies the measurement signal such that a maximum amplitude of the measurement signal has a predetermined value when supplying the measurement signal to the evaluation unit.

The amplifier may be provided with an input and an output terminal, the input terminal being supplied with the measurement signal, e.g. during a measurement of the flow rate, and the output terminal being connected to the evaluation unit in a signal transmitting manner, wherein the amplifier is adapted to output the measurement signal via the output terminal, wherein a peak value of the measurement signal has the predetermined value at the output.

The normalized measurement signal output from the amplifier provides for a better basis for an evaluation for detecting gas bubbles or particles, independent whether the collapsed amplitude or the variation of the plurality of travel times is used.

Generating the normalized measurement signal is particularly useful in case of the amplitude measurement device has a limited dynamic range or e.g. 20 dB. Due to the normalized measurement signal, even big gas bubbles or particles that cause a collapse of more than 20 dB can be detected by the amplitude measurement device.

In order to provide for the normalized measurement signal, the amplification of the amplifier is automatically controlled. Based on the extend of the adjusted amplification and of the relative collapse level in comparison with a reference amplitude, absolute sizes of gas bubbles or particles can be calculated.

The reference amplitude is preferably dynamically tracked in order to adapt to conditions like fluid pressure or humidity of the environment, which may otherwise falsify the measurement. The reference amplitude may be tracked asymmetrically and e.g. highly asymmetrically, e.g. by tracking fast in case the amplitude of the measurement signal increases and by tracking slow in case the amplitude of the measurement signal drops. The measurement channel may be adapted to accommodate a tube, through which the fluid can flow. In particular, the measurement channel can be shaped to form a force fit with the tube. Due to the efficient usage of components of the apparatus according to the invention may be used as a clamp-on sensor that can be clamped onto the tube and may even hold the tube by the force fit.

As the flow rate of the fluid is measured, the volume of both, the fluid and the gas bubbles and/or particles can be determined if the geometry of the tube is at least partly known. Based on the volume of the gas bubbles or particles the total volumes or rates of gas bubbles or particles can be determined. Depending of the total volume or rate, different alarm signals or even no alarm signal can be generated and false alarms can be avoided.

The invention is describes hereinafter in greater detail and in an exemplary manner using advantages embodiments and with reference to the drawings. The describes embodiments are only possible configurations, in which, however, the individual features as describes above can be provided independently of one another or can be omitted in the drawings:
- Figure 1: is a schematic view of an exemplary embodiment of an apparatus for determining a flow rate of a fluid and for detecting gas bubbles or particles;
- Figure 2: is a schematic view of an exemplary embodiment of a method of determining a flow rate of a fluid and of detecting gas bubbles or particles in the fluid; and
- Figure 3: shows another exemplary embodiment of the method schematically.

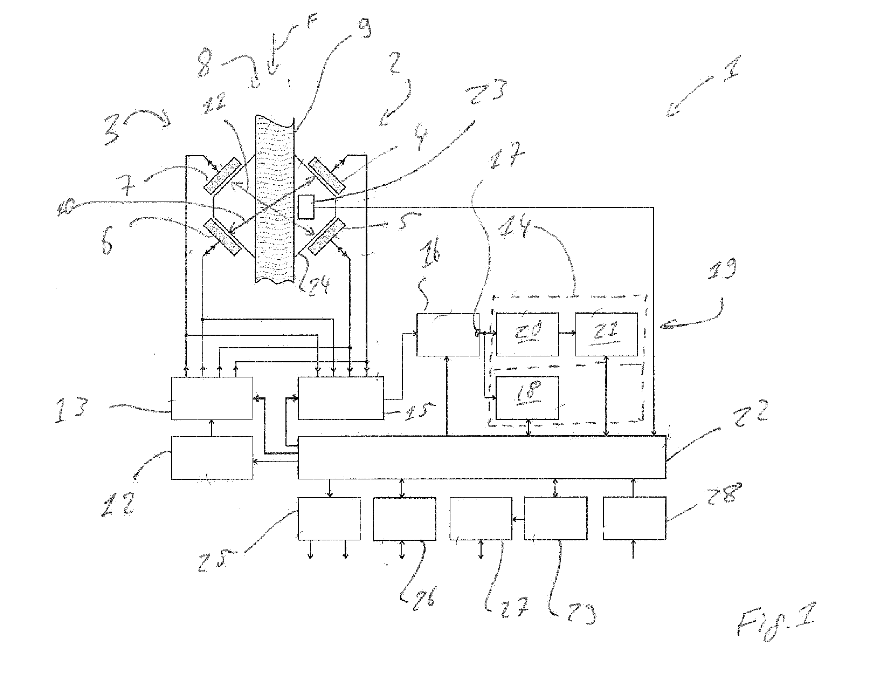

First, an apparatus 1 for determining a flow rate of a fluid and for detecting gas bubbles or particles in the fluid is describe with reference to figure 1. The apparatus 1 comprises two sensor arrangements 2, 3, each of which being formed with two ultrasonic transducers 4, 5, 6, 7. In particular, the ultrasonic transducers 4, 6 form the first measurement arrangement 2 and the ultrasonic transducers 5, 7 form the second sensor arrangement 3. The ultrasonic transducers 4, 5, 6, 7 of each of the sensor arrangements 2, 3 are placed at opposite sides of a measurement channel 8. Between the ultrasonic transducers 4, 6 of the first measurement arrangement 2 and the ultrasonic transducers 5, 7 of the second sensor arrangement 3, measurement paths 10, 11 extend, along which ultrasonic signals are transmitted between the ultrasonic transducers 4, 6 of the first sensor arrangement 2 or between the ultrasonic transducers 5, 7 of the second sensor arrangement 3. The measurement paths extend in different directions and at predetermined appropriate angles to the measurement channel 8 or between the measurement paths 10, 11. The measurement paths 10, 11 are preferably arranged mirror-symmetrically with respect to the measurement channel 8.

During operation of the apparatus 1, a first ultrasonic signal may be sent from the ultrasonic transducer 4 to the ultrasonic transducer 6 in a first direction along the measurement path 10 in a first step. In a second step, a second ultrasonic signal may be sent from the ultrasonic transducer 5 to the ultrasonic transducer 7 in a second direction and along the measurement path 11. In a third step, an ultrasonic signal may be sent from the ultrasonic transducer 6 to the ultrasonic transducer 4 along the measurement path 10 and in an opposite direction of the first step. Furthermore, in a fourth step, an ultrasonic signal may be sent from ultrasonic transducer 7 to ultrasonic transducer 5 along the measurement path 11 and in a direction that is opposite to the direction of step two.

A tube 9 for conducting a fluid is placed in the measurement channel 8, such that an ultrasonic signal, emitted form any of the ultrasonic transducers 4, 5, 6, 7 may travel along one of the measurement paths 10, 11 and through the tube 9, i.e. through the fluid conducted by the tube 9. The tube 9 may conduct the fluid in a flow direction F, which extends parallel to the measurement channel 8 at least when the fluid passes the measurement channel 8.

In order to be able to transmit ultrasonic signals through the measurement channel 8, the apparatus 1 may comprise an ultrasonic generator or source 12, that can be connected to each of the ultrasonic transducers 4, 5, 6, 7 in an ultrasonic conductive manner or in a control signal conductive manner. In the following, the term ultrasonic source 12 is used. In the alternative, the term ultrasonic generator may be used for item 12. Between the ultrasonic source 12 and the sensor arrangements 2, 3, a multiplexer device 13 may be arranged, which connects the ultrasonic source 12 only to selected ultrasonic transducers 4, 5, 6, 7. For instance, the multiplexer device 13 may in the first step interconnect the ultrasonic source 12 to the ultrasonic transducer 4. After that, ultrasonic transducer 5 may be connected to the ultrasonic source 12 by the multiplexer device 13. Then, the multiplexer device 13 may connect the ultrasonic source 12 to ultrasonic transducer 6 in the third step. After that, the multiplexer device 13 can connect ultrasonic transducer 7 with the ultrasonic source 12. Such a measurement cycle that comprises the first to the fourth steps as described above can be repeatedly performed in order to continuously determine the flow rate and detect gas bubbles or particles in the fluid.

During operation of the apparatus 1, any of the ultrasonic transducers 4, 5, 6, 7, which acts as an ultrasonic sensor, may be connected to an evaluation unit 14 in a signal transmitting manner. The evaluation unit 14 determines the flow rate and detects gas bubbles or particles in the fluid based on measurement signals transmitted from the ultrasonic transducers 4, 5, 6, 7 working in a sensor mode. For instance, ultrasonic transducer 6 may be operated in a sensor mode, in case ultrasonic transducer 4 is operated in an ultrasonic emitter mode.

In order only to conduct measurement signals from selected ultrasonic transducers 4, 5, 6, 7 that are operated as an ultrasonic sensor, apparatus 1 preferably further comprises another multiplexer device 15, which is connected to each of the ultrasonic transducers 4, 5, 6, 7 and which transfers a measurement signal only of selected ultrasonic transducers 4, 5, 6, 7 to the evaluation unit 14. In particular, in each of the first to the fourth steps, the multiplexer device 13 may connect one of the ultrasonic transducers 4, 5, 6, 7 of one of the sensor arrangments 2, 3 to the ultrasonic source 12 and the other multiplexer device 15 may connect the other one of the ultrasonic transducers 4, 5, 6, 7 of the one of the sensor arrangements 2, 3.

Between the evaluation unit 14 and the multiplexer device 15, an amplifier 16 is provided. The amplifier 16 receives the measurement signal from the multiplexer device 15 during operation of the apparatus 1. An output terminal 17 of the amplifier 16 is connected to the evaluation unit 14 in a signal transmitting manner. During operation, the amplifier 16 preferably outputs a normalized measurement signal via the output terminal 17 to the evaluation unit 14. A maximum amplitude of the normalized measurement signal has a constant value.

The evaluation unit 14 comprises an amplitude measurement device 18 that is connected to the output terminal 17 in a signal transmitting manner. Hence, the amplitude measurement device 18 is supplied with the normalized measurement signal during operation of apparatus 1.

Furthermore, the evaluation unit 14 comprises a travel time measurement device 19, which is supplied with the normalized measurement signal from the output terminal 17 during operation. The travel time measurement device 19 is equipped with a zero-crossing comparator 20 and a timer 21 which may be provided as a time to digital converter. First, the normalized measurement signal is supplied to the zero-crossing comparator 20, which detects zero-crossings of the normalized measurement signal. The detected zero-crossings are supplied from the zero-crossing comparator 20 to timer 21, which determines and outputs timer data of the zero-crossings.

The evaluation unit 14 is connected to a calculation unit 22 in a signal transmitting manner. The calculation unit 22 receives amplitude value data from the amplitude measurement device 18 and zero-crossing timer data from the timer 21. In the calculation unit 22, the flow rate is determined based on the zero-crossing timer data, e.g. by averaging multiple zero-crossing timer data sets. Furthermore, the amplitude data is used for detecting gas bubbles or particles in the fluid.

In order to be able to detect small gas bubbles or particles in the fluid, which may e.g. have a diameter of less than 50 µm and in particular between 5 and 50 µm, the calculation unit 22 may use very precise zero-crossing timer data. Variations of several zero-crossing timer data may be used in the calculation unit 22 in order to detect small gas bubbles or particles.

In order to be able to measure the flow rate without an influence of temperature, the apparatus 1 may be provided with a temperature sensor 23 that is for instance arranged at a measurement head 24, in which the measurement channel 8 is formed and which interconnects the ultrasonic transducers 4, 5, 6, 7 with the measurement channel 8 in an ultrasonic conductive manner. The temperature sensor 23 may be connected to the calculation unit 22 in a signal transmitting manner.

The ultrasonic source 12 and the multiplexer devices 13, 15 may be connected to the calculation unit 22 in a control signal transmitting manner. Hence, the calculation unit 22 may be designated as a controller unit.

Apparatus 1 may furthermore comprise an output device 25 for providing switching and current output terminals, a serial interface 26, a CAN-BUS interface 27 and a supply device 28 for supplying operating voltage, which are connected to the calculation unit 22 in a signal transmitting manner.

The CAN-BUS interface 27 may be connected to the calculation unit 22 via a so-called watch dog device 29, which blocks the CAN-BUS in case the calculation unit 22 is in a non-operative mode.

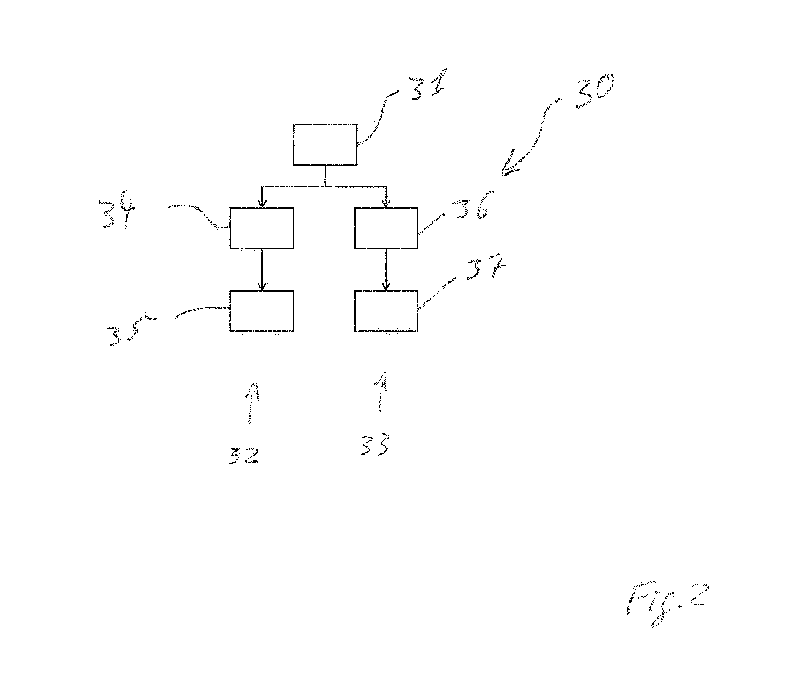

Figure 2 shows a schematic view of a first exemplary embodiment of a method according to the invention as a flow chart.

Figure 2 shows a method 30 of determining a flow rate of a fluid and of detecting gas bubbles or particles in the fluid. Method 30 starts with a first step 31. In step 31, an ultrasonic signal may be induced into a fluid, whose flow rate is to be determined, wherein the presence of gas bubbles or particles shall be detected in the fluid. The method 30 comprises two threads 32, 33. In thread 32, the flow rate of the fluid is determined. In thread 33 gas bubbles or particles in the fluid may be detected in case gas bubbles or particles are present in the fluid. The two threads 32, 33 may be performed simultaneously.

Thread 32 starts with step 34, in which a travel time of the ultrasonic signal through the fluid is determined. In the following step 35, the flow rate is calculated based on the travel time or on several travel times.

Thread 33 starts with step 36, in which an amplitude of the ultrasonic signal after travelling through the fluid is measured. In the following step 37, the amplitude is inspected for a collapse. In case a collapse of the amplitude is detected, this collapse is interpreted in step 37 as a gas bubble or a particle.

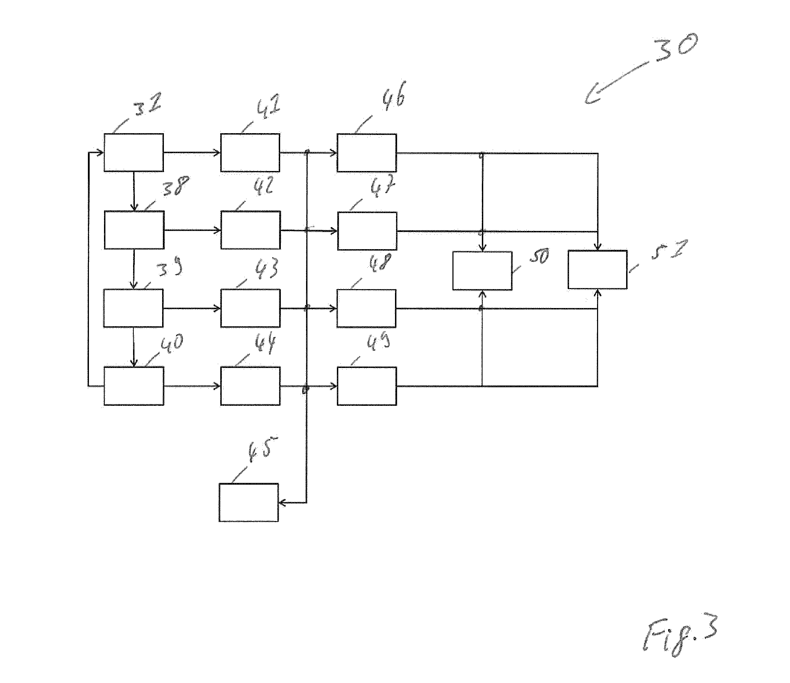

Figure 3 shows another embodiment of the method as a flow chart. Same reference signs are being used for elements, which correspond in function and/or structure of the elements of the exemplary embodiment of Figure 2. For the sake of brevity, only the differences from the exemplary embodiment of Figure 2 are discussed in the following.

According to the exemplary embodiment of Figure 3, method 30 starts with step 31 in which the first ultrasonic signal is induced into the fluid in a first direction. After inducing the first ultrasonic signal, a second ultrasonic signal is induced into the fluid in step 38 which may immediately follow after step 31. The second ultrasonic signal may be induced in a second direction, which differs from the direction of the first ultrasonic signal. Immediately directly after step 38, step 39 may be performed, in which a third ultrasonic signal is induced in a third direction, which may be the opposite direction of the first direction, in which the first ultrasonic signal is induced. After step 39, step 40 may be immediately performed, in which a fourth ultrasonic signal is induced in a fourth direction, which may be the opposite direction to the second direction.

Steps 31, 38, 39 and 40 may be repeatedly performed, in case the flow rate shall be determined or the fluid shall be checked for gas bubbles or particles over a longer period.

After inducing the ultrasonic signals and in particular immediately after each of the steps 31, 38, 39 and 40, the amplitudes of the ultrasonic signals may be measured in method steps 41, 42, 43, 44. Based on the measured amplitudes and in particular in case an amplitude of one of the ultrasonic signals is collapsed after travelling through the fluid, an error signal may be generated in step 45, which indicates that gas bubbles or particles are present in the fluid, e.g. in an inadmissible amount or with an inadmissible size.

After measuring the amplitude in steps 41, 42, 43, 44, travel times of the ultrasonic signals required for passing the fluid can be determined in steps 46, 47, 48, 49. The measured travel times may be averaged in method step and used for determining a flow rate in method step 50.

In the exemplary embodiment of figure 3, the amplitudes are measured before the travel times. Alternatively, amplitudes and travel times of each of the ultrasonic signals can be measured simultaneously.

In order to be able to detect gas bubbles or particles, which are too small in order to be detectable by collapsed amplitudes of ultrasonic signals, the travel times measured in steps 46, 47, 48, 49 can be used for detecting small gas bubbles or particles, which may have a diameter of less than 50 µm. In particular, a variance of travel times may indicate the presence of small gas bubbles or particles. Hence, the variance of travel times may be determined in step 51 and a warning signal may be generated, in case the variance is above an upper limit.

In order to be able to provide a good data base for determining the variance of travel times in step 51, at least one and preferably all of the ultrasonic signals may comprise a plurality of ultrasonic pulses, wherein each of the ultrasonic signals may be designated as an ultrasonic burst. The pulses of each of the ultrasonic signals comprise a constant amplitude and phase shift before travelling through the fluid. Variations of timing of the pulses and in particular of zero-crossings of the measurement signal representing the pulses after travelling through the fluid may be used to detect small gas bubbles or particles. The timing of the pulses and in particular of zero-crossings of the measurement signal representing the pulses after travelling through the fluid may furthermore represent the travel time of each of the pulses.

Using ultrasonic bursts with ultrasonic pulses and using variations of timing of the pulses and in particular of zero-crossings of the measurement signal representing the pulses after travelling through the fluid for detecting small gas bubbles or particles is advantageous independently of the remaining method steps as described above.

## Claims

1. Method (30) of determining a flow rate of a fluid and of detecting gas bubbles or particles in the fluid, wherein at least one ultrasonic signal is induced into the fluid (31) and a travel time of the ultrasonic signal through the fluid as well as an amplitude of the ultrasonic signal after travelling through the fluid are measured (34, 36), wherein the travel time is being used for determining the flow rate (35) and a collapse of the amplitude is being used for detecting gas bubbles or particles (37).

2. Method (30) according to claim 1, **characterized in that** at least two ultrasonic signals are subsequently induced into the fluid in different directions (31, 38) and amplitudes of at least one of the ultrasonic signals after travelling through the fluid (41, 42) are measured and used for detecting gas bubbles or particles in the fluid.

3. Method (30) according to claim 1 or 2, **characterized by** performing a measurement cycle that comprises a first measurement step, in which a first ultrasonic signal is induced in a first direction (31), a second measurement step, in which a second ultrasonic signal is induced in a second direction that differs from the first direction (38), a third measurement step, in which a third ultrasonic signal is induced in a third direction that is the opposite direction of the first direction (39), and a fourth measurement step, in which a fourth ultrasonic signal is induced in a fourth direction that is the opposite direction to the second direction (40).

4. Method (30) according to claim 3, **characterized in that** the amplitude of each of the ultrasonic signals is inspected for a collapse after each of the measurement steps.

5. Method (30) according to any of claims 1 to 4, **characterized in that** travel times of ultrasonic signals that comprise a collapsed amplitude are ignored for determining the flow rate.

6. Method (30) according to any of claims 2 to 5, **characterized in that** a variance of a plurality of travel times is used to detect gas bubbles or particles (50).

7. Method (30) according to any of claims 1 to 6, **characterized in that** a phase of the amplitude is used for determining variances of travel times (50).

8. Method (30) according to any of claims 1 to 7, **characterized in that** the at least one ultrasonic signal comprises a plurality of ultrasonic pulses.

9. Method (30) according to claim 8, **characterized in that** the plurality of ultrasonic pulses of the at least one ultrasonic signal comprises a constant amplitude and phase correlation.

10. Apparatus (1) for determining a flow rate of a fluid and for detecting gas bubbles or particles in the fluid, that comprises at least one sensor arrangement (2, 3) with an ultrasonic emitter (4, 5, 6, 7) for emitting an ultrasonic signal, and an ultrasonic sensor (4, 5, 6, 7) for converting the ultrasonic signal into a measurement signal, that are arranged at opposite ends of a measurement path (10, 11), which extends through a measurement channel (8) for the fluid, the apparatus (1) further comprising an evaluation unit (14) that is connected to the ultrasonic sensor (4, 5, 6, 7) in a signal transmitting manner and that is adapted to evaluate travel times of ultrasonic signals through the measurement path (10, 11) and to monitor amplitudes of ultrasonic signals after travelling through the measurement path (10, 11) in order to determine the flow rate and to detect gas bubbles or particles.

11. Apparatus (1) according to claim 10, **characterized in that** it comprises at least two sensor arrangements (2, 3) each having an ultrasonic emitter (4, 5, 6, 7) and an ultrasonic sensor (4, 5, 6, 7), wherein the ultrasonic emitter (4, 5, 6, 7) and the ultrasonic sensor (4, 5, 6, 7) of each of the sensor arrangements (2, 3) are arranged at opposite ends of measurement paths (10, 11) that extend in different directions and through the measurement channel (8) for the fluid.

12. Apparatus (1) according to claim 11, **characterized in that** each of the sensor arrangements (2, 3) comprises an ultrasonic emitter (4, 5, 6, 7) at each end of the measurement paths (10, 11).

13. Apparatus (1) according to any of claims 10 to 12, **characterized in that** the evaluation unit (14) comprises an amplitude measurement device (18) and a time measurement device (19) that are supplied with the measurement signal.

14. Apparatus (1) according to any of claims 10 to 13, **characterized by** an amplifier (16) with an input and an output terminal (17), the input terminal being supplied with the measurement signal and the output terminal (17) being connected to the evaluation unit (14) in a signal transmitting manner, the amplifier being adapted to output the measurement signal, wherein a peak value of the measurement signal has a predetermined value at the output.
